# EUROPEAN PATENT APPLICATION

(11) **EP 4 442 171 A1**
(43) Date of publication of application: **09.10.2024**
(21) Application number: 21966506.4
(22) Date of filing: 13.12.2021
(51) Int. Cl.: A47J 31/06, A47J 31/46, A47J 31/44

(54) **COFFEE MAKER**

(30) Priority: 03.12.2021 KR 20210171540
(71) Applicant: LG Electronics Inc., Yeongdeungpo-gu Seoul 07336 (KR)
(72) Inventor: YANG, Jungkeun, Seoul 08592 (KR); NAM, Hyeunsik, Seoul 08592 (KR); CHOI, Seung-Yeon, Seoul 08592 (KR)
(74) Representative: Vossius & Partner Patentanwälte Rechtsanwälte mbB
(86) International application number: PCT/KR2021/018837
(87) International publication number: WO 2023/101080

(57) **Abstract**

A coffee maker is disclosed. The disclosed coffee maker has a dripper cap provided inside an extraction hole of a dripper and allows the dripper cap to move up and down linearly by means of screw rotation. Therefore, the operation of opening/closing the extraction hole can be simply implemented.

## Description

### [Technical Field]

The disclosure relates to a coffee maker that extracts coffee from coffee beans or coffee powder.

### [Background Art]

Recently, many consumers are making and drinking coffee directly at home or work in various ways.

Among the methods of producing coffee, a hand drip method is a method of placing roasted coffee powder in a dripper equipped with a filter, pouring water into the coffee powder, and extracting the coffee through the bottom of the dripper where extraction holes are formed. The hand drip method includes a pre-wetting process and a coffee extraction process.

The pre-wetting process is also called blooming, pre-infusion, etc., and is a process of pouring a small amount of water into the coffee powder and waiting for a certain period of time before performing the coffee extraction process. Through the pre-wetting process, water is uniformly spread in the coffee powder in advance, and the carbon gas contained in the coffee powder is discharged. The coffee extraction process involves pouring a large amount of water into coffee powder to extract coffee.

Meanwhile, prior technologies for extracting coffee in a manner similar to the hand drip method have been disclosed.

Republic of Korea Registered Patent No. 10-1324817 discloses a coffee hand drip device. The coffee hand drip device described above injects a certain amount of water into the coffee powder in the drip unit and rotates the drip unit so that the water comes into uniform contact with the coffee powder. In addition, a flow control valve, which controls the opening degree of the extraction hole of the drip unit, controls the coffee extraction speed by the amount of water injected.

However, in the above-mentioned coffee hand drip device, the coffee extraction speed is manually controlled by the amount of water, and in order to achieve the extraction speed of coffee desired by the user, the user must directly adjust the amount of water injected. Accordingly, the user may experience inconvenience and cannot accurately control the coffee extraction speed.

Republic of Korea Registered Patent No. 10-1570162 discloses a dripper that may adjust the coffee extraction time. The dripper is equipped with a spiral module for setting the coffee extraction time, and when the extraction time has elapsed, the drain valve opens the lower opening of the extraction container.

However, the above-described dripper has the disadvantage of having a complicated structure for moving the drain valve. In addition, the above-described dripper has the disadvantage of not being able to adjust the opening degree of the lower opening.

### [DISCLOSURE]

### [Technical Problem]

An object of the disclosure is to provide a coffee maker that opens and closes an extraction hole for extracting coffee with a simple structure.

In addition, an object of the disclosure is to provide a coffee maker that can easily open and close the extraction hole for extracting coffee and can simply and accurately control the opening degree of the extraction hole.

In addition, an object of the disclosure is to provide a coffee maker in which a dripper can be easily attached and detached.

An object of the disclosure is to provide a coffee maker that can extract coffee similar to a hand drip operation.

In addition, an object of the disclosure is to provide a coffee maker that can remove the bitter taste contained in extracted coffee.

The objects of the disclosure are not limited to the objects mentioned above, and other objects and advantages of the disclosure that are not mentioned may be understood through the following description, and may be understood more clearly by the embodiments of the disclosure.

### [Technical Solution]

A coffee maker according to an embodiment of the disclosure may be installed with a dripper cap inside the extraction hole of a dripper and move the dripper cap up and down linearly by screw rotation. Therefore, the opening and closing operation of the extraction hole may be easily implemented.

In addition, a coffee maker according to an embodiment of the disclosure may control the distance of the linear up and down movement of the dripper cap by controlling the amount of screw rotation. Accordingly, the opening degree of the extraction hole may be adjusted simply and accurately.

In addition, a coffee maker according to an embodiment of the disclosure may constitute a dripper valve module that opens and closes an extraction hole to include a first dripper valve module coupled to a lower surface of a dripper, and a second dripper valve connected to a case. In this case, when extracting coffee, the first dripper valve module coupled to the lower surface of the dripper may be mounted on the second dripper valve module to rotate the first dripper valve module, and when extraction of the coffee is completed, the first dripper valve module coupled to the lower surface of the dripper may be detached from the second dripper valve module. Therefore, mounting and detachment of the dripper may be easily implemented.

In addition, the coffee maker according to an embodiment of the disclosure may close the extraction hole by controlling the dripper valve module to a closed state in a first water supply section corresponding to a pre-wetting process, and open the extraction hole by controlling the dripper valve module to an open state in a second water supply section corresponding to a coffee extraction process. Accordingly, a coffee drip process similar to the hand drip operation may be implemented.

In addition, a coffee maker according to an embodiment of the disclosure may close the extraction hole after the coffee extraction process is completed. Therefore, the bitter taste may be removed from the extracted coffee, and the extracted coffee may not fall to the bottom.

In addition, a coffee maker according to an embodiment of the disclosure may comprise a dripper that receives coffee powder and includes an extraction hole formed on a lower surface for extracting coffee from the coffee powder, a dripper valve module that includes a first dripper valve module that couples with the lower surface of the dripper and a second dripper valve module that supports the dripper coupled to the first dripper valve module, and opens and closes the extraction hole, and a water outlet module that supplies water to the coffee powder. In this case, the first dripper valve module may include a dripper base that is coupled to the lower surface of the dripper so as to be axially rotatably, and a dripper cap that moves up and down linearly inside the extraction hole to open and close the extraction hole based on screw rotation realized by the axial rotation of the dripper base, and the second dripper valve module may axially rotate the dripper base.

In addition, the dripper base may be provided with a connection hole that communicates with the extraction hole, the dripper cap may be disposed inside the extraction hole and connection hole, a first screw may be formed on the inner surface of the connection hole, and a second screw that engages with the first screw may be formed on the outer surface of the dripper cap. The first screw rotates by axial rotation of the dripper base, and the second screw is unscrewed or screwed by rotation of the first screw. As a result, the dripper cap may move up and down linearly inside the extraction hole.

In addition, when the dripper base axially rotates in a first direction, the connection hole rotates in the first direction, the second screw is unscrewed from the first screw, and the dripper cap may move upward linearly inside the extraction hole. Also, when the dripper base rotates in a second direction opposite to the first direction, the connection hole rotates in the second direction, the second screw is screwed to the first screw, and the dripper cap may move downward linearly inside the extraction hole.

In addition, when the dripper cap is located at a default position, the extraction hole may be closed, and when the dripper cap moves upward linearly from the default position, the extraction hole may be open.

In addition, a distance that the dripper cap moves upward linearly may be proportional to an opening degree of the extraction hole.

In addition, the default position may be a position of the dripper cap where the first screw is completely engaged with the second screw.

In addition, the dripper cap may include a lower part where the second screw is formed, an upper part where at least one guide member for guiding a linear up and down movement of the dripper cap is formed, a middle part connecting the lower part of the dripper cap and the upper part of the dripper cap.

In addition, the extraction hole may include a first extraction hole and second extraction hole that are formed to be stepped. In this case, a size of the first extraction hole may be larger than a size of the second extraction hole, and the first extraction hole may correspond to an upper side of the extraction hole and have at least one guide protrusion that guides the linear up and down movement of the dripper cap, and the second extraction hole may correspond to a lower side of the extraction hole.

In addition, each of the at least one guide members may include a guide hole, and the guide hole may be coupled to the guide protrusion to enable the linear up and down movement.

In addition, a shape of the second extraction hole may be cylindrical or funnel-shaped.

In addition, when the first screw is completely engaged with the second screw, the upper part of the dripper cap may contact a bottom surface of the first extraction hole, and the second extraction hole may be closed. Also, when the first screw is not completely engaged with the second screw, the upper part of the dripper cap does not contact the bottom surface of the first extraction hole, and the second extraction hole may be opened.

In addition, the first dripper valve module may further include a dripper sealer that is disposed below the at least one guide member and prevents coffee from flowing into the extraction hole when the extraction hole is closed.

In addition, the first dripper valve module may further include a dripper wing that is fixedly coupled to the dripper base inside the dripper base and contacts a lower surface of the dripper. In this case, when the dripper base axially rotates, the dripper does not rotate axially, and the dripper wing may axially rotate.

In addition, when the dripper coupled with the first dripper valve module is mounted on or detached from the second dripper valve module, and when the dripper coupled with the first dripper valve module is mounted on the second dripper valve module, the second dripper valve module may fix the dripper so as not to rotate axially and rotate only the dripper base.

In addition, the second dripper valve module may include a dripper support that accommodates a portion of the dripper coupled to the first dripper valve module, a first pulley that is provided so as to be axially rotatable inside the dripper support and is coupled to the dripper base, and a motor that implements axial rotation of the first pulley. In this case, the dripper base may rotate based on the axial rotation of the first pulley.

In addition, the second dripper valve module may further include a second pulley coupled to the rotation shaft of the motor, and a belt connected between the first pulley and the second pulley. In this case, when the motor is driven, the second pulley axially rotates, and the axial rotation of the second pulley is transmitted to the first pulley by the belt, so that the first pulley may axially rotate.

In addition, the dripper base may be provided with a connection hole in communication with the extraction hole, and the dripper support may include a first dripper support and a second dripper support that is coupled to the first dripper support above the first dripper support. A first through hole communicating with the connection hole may be formed in the first dripper support, a second through hole for accommodating the dripper base may be formed in the second dripper support, and the first pulley may be disposed between the first dripper support and the second dripper support.

In addition, a fixing protrusion for fixing the dripper may be formed on the lower side of the outer surface of the dripper, and a fixing hole connected to the second through hole may be formed in the second dripper support. When the dripper base is accommodated in the dripper support while the fixing protrusion is inserted into the fixing hole, the dripper base may axially rotate and the dripper may be fixed.

In addition, a plurality of first coupling members are formed on the lower side of the dripper base, and a plurality of second coupling members are formed on the inner surface of the first pulley. The dripper base and first pulley may be coupled by alternative coupling of the plurality of first coupling members and plurality of second coupling members.

In addition, a coffee maker according to another embodiment of the disclosure may comprise a case, a dripper that receives coffee powder and includes an extraction hole formed in a lower surface for extracting coffee from the coffee powder, a dripper valve module that includes a first dripper valve module coupled with the lower surface of the dripper, and a second dripper valve module connected to the case, and a water outlet module that supplies water to the coffee powder. In this case, the first dripper valve module may include a dripper cap that moves up and down linearly inside the extraction hole by screw rotation, the extraction hole may be opened and closed by linear up and down movement of the dripper cap, the dripper coupled to the first dripper valve module may be mounted on or detached from the second dripper valve module, and when the coupled dripper is mounted, the second dripper valve module may support the coupled dripper and may implement the screw movement.

### [Advantageous Effect]

According to the disclosure, the opening and closing operations of the extraction hole may be implemented by moving the dripper cap up and down linearly by screw rotation, so that the opening and closing operations of the extraction hole may be simplified and manufacturing costs may be reduced.

In addition, according to the disclosure, by simply and accurately adjusting the opening degree of the extraction hole, the coffee extraction speed may be easily adjusted and various coffee recipes may be implemented.

In addition, according to the disclosure, when coffee extraction is completed, the dripper may be easily cleaned by detaching it from a case.

According to the disclosure, coffee with optimal taste and aroma may be extracted by performing a coffee drip process similar to the hand drip process.

In addition, according to the disclosure, by performing the first water supply section corresponding to the pre-wetting, the flavor of the coffee may be improved by discharging the carbon gas contained in the coffee powder.

In addition, according to the disclosure, convenience of use may be increased by closing the extraction hole after the coffee extraction process is completed to prevent coffee from falling to the floor.

In addition to the above-described effects, specific effects of the disclosure are described below while explaining specific details for implementing the disclosure.

### [Description of Drawings]

FIG. 1 is a diagram illustrating a perspective view of a coffee maker according to an embodiment of the disclosure.
FIG. 2 is a diagram illustrating a perspective view of a coffee maker with some cases omitted, according to an embodiment of the disclosure.
FIG. 3 is a diagram illustrating an exploded perspective view of a water outlet module according to an embodiment of the disclosure.
FIG. 4 is a diagram illustrating a perspective view in which a first part of a dripper module is detached from a second part of the dripper module, according to one embodiment of the disclosure.
FIG. 5 is a diagram illustrating a perspective view in which a first part of a dripper module is mounted on a second part of the dripper module, according to an embodiment of the disclosure.
FIG. 6 is a diagram illustrating a cross-sectional perspective view of FIG. 5.
FIG. 7 is a diagram for explaining a structure in which a first part of a dripper module is mounted on a second part of the dripper module, according to an embodiment of the disclosure.
FIG. 8 is a diagram illustrating a cross-sectional view of a dripper according to an embodiment of the disclosure.
FIG. 9 is a diagram illustrating a cross-sectional view of a dripper according to another embodiment of the disclosure.
FIG. 10 is a diagram illustrating a perspective view of a dripper cap according to an embodiment of the disclosure.
FIG. 11 is a diagram illustrating a cross-sectional view of a dripper cap according to an embodiment of the disclosure.
FIG. 12 is a diagram illustrating an exploded cross-sectional perspective view of some components of a dripper module according to an embodiment of the disclosure.
FIGS. 13 and 14 are diagrams for explaining operations of opening and closing an extraction hole according to an embodiment of the disclosure.

### [Mode for Invention]

The above-described objectives, features and advantages are specifically described with reference to the attached drawings hereunder such that one having ordinary skill in the art to which the disclosure pertains may easily implement the technical spirit of the disclosure. In describing the disclosure, detailed description of known technologies in relation to the disclosure is omitted if it is deemed to make the gist of the disclosure unnecessarily vague. Below, preferred embodiments of the disclosure are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and a first component may be a second component unless stated to the contrary.

Throughout the disclosure, each component may be provided as a single one or a plurality of ones, unless explicitly stated to the contrary.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

Throughout the specification, "upward-downward direction" means the upward-downward direction of the coffee maker in a state in which the coffee maker is installed for daily use. "Leftward-rightward direction" means a direction perpendicular to the upward-downward direction, and frontward-rearward direction means a direction perpendicular to both the upward-downward direction and the leftward-rightward direction. "Bilateral direction" or "lateral direction" has the same meaning as leftward-rightward direction, and these terms may be used interchangeably in the specification.

In the specification, whole beans should be understood to include roasted coffee beans, not coffee beans harvested from coffee trees. There may be several types of roasted coffee beans depending on the degree of roasting. For example, dark roasted coffee may dissolve its coffee components in water more easily than light roasted coffee. However, in the specification, coffee beans are used to mean roasted coffee beans to be used for coffee extraction regardless of the degree of roasting.

In addition, in the specification, a coffee maker refers to a device that mixes ground coffee, i.e., coffee powder, with water and then dissolves the coffee ingredients in water to extract liquid coffee or coffee liquid. Coffee liquid refers to water containing coffee ingredients extracted from coffee powder. Therefore, in the specification, extracting coffee liquid means dissolving coffee powder in water and extracting water containing coffee components from the coffee powder. Therefore, unless otherwise stated, coffee generally refers to coffee liquid, and coffee beans and coffee powder refer to coffee in solid form.

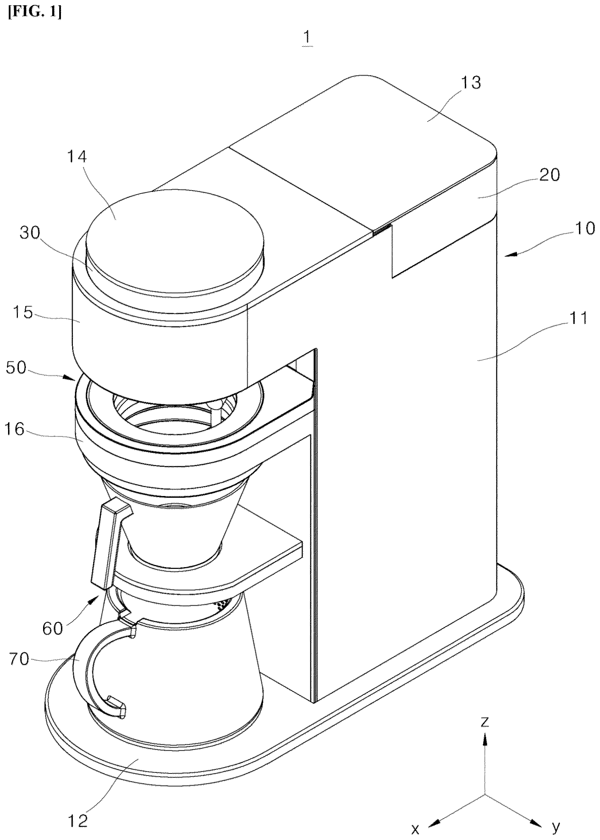

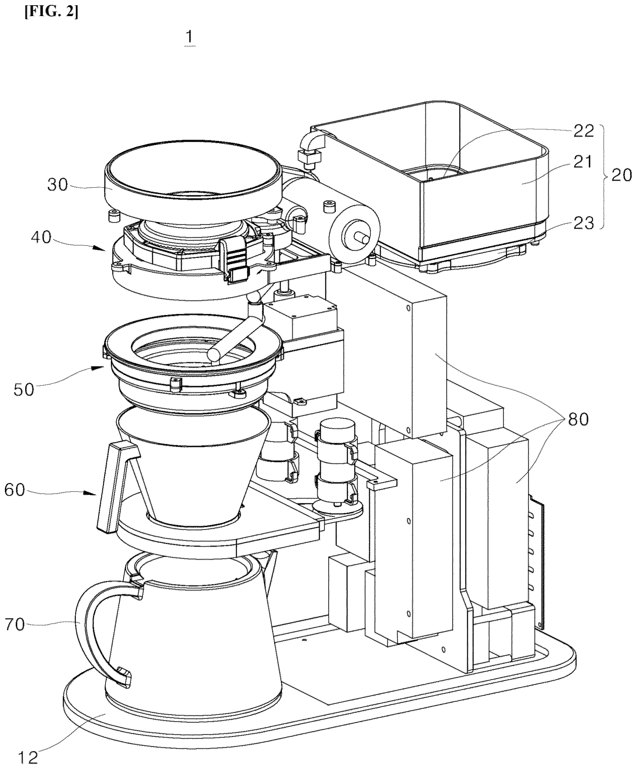

FIG. 1 is a diagram illustrating a perspective view of a coffee maker 1 according to an embodiment of the disclosure. FIG. 2 is a diagram illustrating a perspective view of the coffee maker 1 with some of a case 10 omitted, according to an embodiment of the disclosure.

In the coordinate axes shown in FIG. 1, the x-axis and -x-axis directions are expressed as forward and backward, the y-axis and -y-axis directions are expressed as the right and left, and the z-axis and -z-axis directions are expressed as upward and downward.

Referring to FIGS. 1 and 2, the coffee maker 1 may include a case 10, a water tank module 20, a hopper 30, a grinder module 40, a water outlet module 50, a dripper module 60, a coffee server 70, and a circuit board 80.

The case 10 may form the exterior of the coffee maker 1. The case 10 may have various shapes.

As an embodiment, referring to FIGS. 1 and 2, the case 10 may include a body 11, a base 12, a first cover 13, a second cover 14, a first installation part 15, and a second installation part 16.

The body 11 may provide an installation space for the components of the coffee maker 1. The base 12 may support the body 11 and the coffee server 70 may be seated thereon. The first cover 13 may cover the inlet of the water tank module 20 and protect water from the outside. The second cover 14 may cover the inlet of the hopper 30 and protect the coffee beans from the outside. The first installation part 15 may provide a space for installing a portion of the hopper 30 and the grinder module 40. The second installation part 16 may provide a space for installing the water outlet module 50.

The water tank module 20 may receive water and heat the received water. The water tank module 20 may receive water in various ways and heat water.

As an embodiment, referring to FIGS. 1 and 2, the water tank module 20 may include a water tank body 21, a heating plate 22, and a heating module 23.

The water tank body 21 has an empty internal space, and the upper inlet may be opened. As an embodiment, the water tank body 21 may have a rectangular parallelepiped shape with an open top. However, the disclosure is not limited thereto, and the water tank body 21 may have various shapes.

The water may be received in the internal space of the water tank body 21. In this case, the temperature of the water received may be room temperature water. The inlet of the water tank body 21 may be closed by the first cover 13.

Meanwhile, although not shown in the drawing, the water tank module 20 may include a water level sensor. The water level sensor may detect the level of water received in the water tank body 21. The detected sensing value (water level value) may be transmitted to a control module 90 (FIG. 15).

The heating plate 22 may be installed on the inner lower surface of the water tank body 21. According to another embodiment, the heating plate 22 may be installed on the outer lower surface of the water tank body 21. The heating plate 22 may be made of metal. In case that the water tank body 21 has a rectangular parallelepiped shape, the heating plate 22 may have a rectangular shape. However, the disclosure is not limited thereto.

The heating module 23 may be a device installed to heat the water received in the water tank body 21. As an embodiment, the heating module 23 may heat water using an induction heating (IH) method. To this end, although not shown in the drawing, the heating module 23 may include a working coil, ferrite, aluminum shield, temperature sensor, etc.

According to the induction heating method, high-frequency power of a predetermined size is applied to the working coil to generate a magnetic field around the working coil. Based on the generated magnetic field, an eddy current is generated in an object to be heated, which is made of a metal component, that is, the heating plate 22. Based on the generated eddy current, the object to be heated, that is, water, is heated.

By heating water using induction heating, water may be heated at a high rate, and water may be heated to a desired temperature by controlling the output of the magnetic field. Therefore, according to the user's operation, water of the user's desired temperature may be generated.

Meanwhile, the heating method of the heating module 23 is not limited to the content described above, and various heating methods may be applied to the coffee maker 1.

The hopper 30 may receive coffee beans. The hopper 30 may store a sufficient amount of coffee beans and provide a certain amount of coffee beans to the grinder module 40.

The hopper 30 may have various shapes. As an embodiment, referring to FIGS. 1 and 2, the hopper 30 may generally have a funnel shape.

The grinder module 40 may generate coffee powder by grinding the coffee beans provided by the hopper 30. The grinder module 40 may be disposed below the hopper 30 and above the dripper module 60. The coffee powder generated by the grinder module 40 may be provided to the dripper module 60 by gravity and received inside the dripper module 60.

The grinder module 40 may grind coffee beans according to a preset grinding degree. The grinding degree may correspond to the particle size of the coffee powder. If the grinding degree is high, the particle size of the coffee powder may be small, and if the grinding degree is low, the particle size of the coffee powder may be large. In other words, the grinding degree may have an inverse relationship with the particle size of the coffee powder.

The grinding degree may be set in various ways depending on the coffee recipe. The grinding degree may be set by the user. For example, the coffee maker 1 may implement a plurality of coffee recipes, the user may select one of the plurality of coffee recipes, and the grinding degree may be set based on the selected coffee recipe. Alternatively, the coffee maker 1 may include a sensor (e.g., an image sensor) that detects the particle size of the coffee powder, and the grinding degree may be set based on the detected particle size of the coffee powder. In other words, the grinding degree may be automatically set without user involvement through detection of the particle size of the coffee powder.

In order to grind coffee beans, the grinder modules 40 of various structures may be applied to the coffee maker 1. For example, the grinder module 40 may include various components such as a motor, an inner burr, an outer burr, etc. A detailed structural description of the grinder module 40 will be omitted.

The water outlet module 50 may supply water to the coffee powder received in the dripper module 60. The water outlet module 50 may be disposed below the grinder module 40 and above the dripper module 60. That is, if the water outlet module 50 is disposed above the grinder module 40, the supply of water may be interrupted by the grinder module 40, so the water outlet module 50 may be disposed between the grinder module 40 and the dripper module 60. In addition, in order to naturally supply water by gravity, the water outlet module 50 may be disposed above the inlet of the dripper module 60.

The water outlet module 50 may supply water received in the water tank module 20 to the dripper module 60. The water outlet module 50 may supply room temperature water or hot water to the dripper module 60. When the heating module 23 of the water tank module 20 does not operate, the water outlet module 50 may supply room temperature water to the dripper module 60, and thus, coffee may be extracted using the hot brew method. When the heating module 23 of the water tank module 20 operates, the water outlet module 50 may supply hot water to the dripper module 60, and thus coffee may be extracted using the cold brew method.

The water outlet module 50 may provide water to the dripper module 60 in a first water supply section corresponding to the pre-wetting section and a second water supply section corresponding to the coffee extraction section, respectively. In addition, according to a preferred embodiment of the disclosure, similar to the hand drip operation, the water outlet module 50 may discharge water in a spiral shape and supply the water to the coffee powder. Accordingly, similar to the hand drip operation, the water may be supplied to the coffee powder.

The dripper module 60 may be disposed below each of the grinder module 40 and the water outlet module 50. The dripper module 60 is provided in the grinder module 40 and may receive the coffee powder that has passed through the water outlet module, and may receive the water provided in the water outlet module 50, and may extract coffee from the water and coffee powder.

The dipper module 60 may include an inlet and outlet. The coffee powder and water may be supplied to the receiving space of the dripper module 60 through the inlet of the dripper module 60. The outlet of the dripper module 60 is formed on the lower side of the dripper module 60, and the extracted coffee may be supplied to the coffee server 70.

The outlet of the dripper module 60 may be open or closed. In particular, by closing the outlet of the dripper module 60, the coffee maker 1 may implement the pre-wetting process among the hand drip process. In addition, by opening the outlet of the dripper module 60, the coffee maker 1 may implement a coffee extraction process among the hand drip process. In addition, the opening degree of the outlet may be adjusted depending on the coffee recipe.

When room temperature water is supplied from the water outlet module 50, the dripper module 60 may extract coffee using the cold brew method. Alternatively, when hot water is supplied from the water outlet module 50, the dripper module 60 may extract coffee using the hot brew method.

The coffee server 70 is detachable from the case 10, and the user may drink coffee by placing the coffee received in the coffee server 70 in a coffee container.

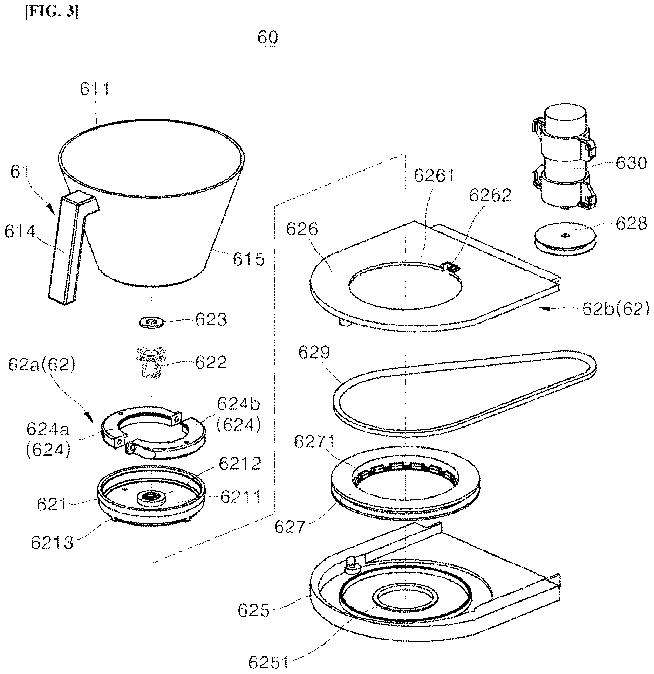

Hereinafter, with reference to FIG. 3 and the like, the structure of the dripper module 60 will be described in more detail.

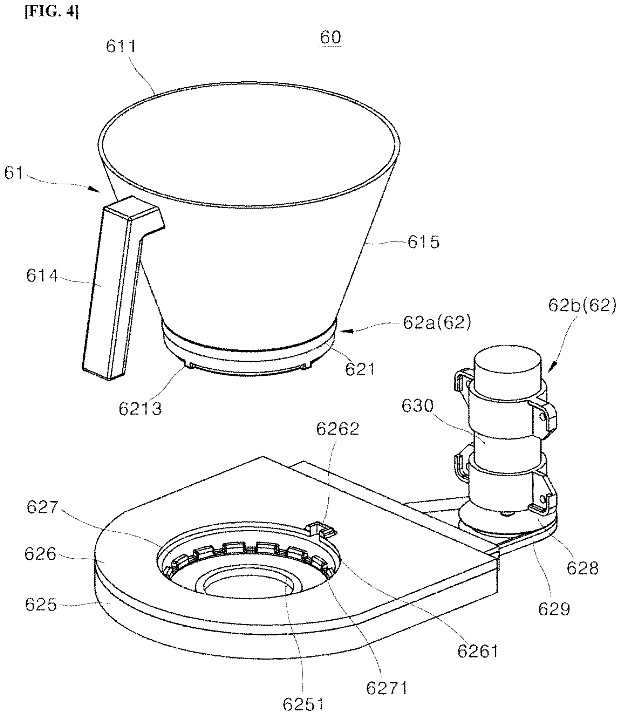

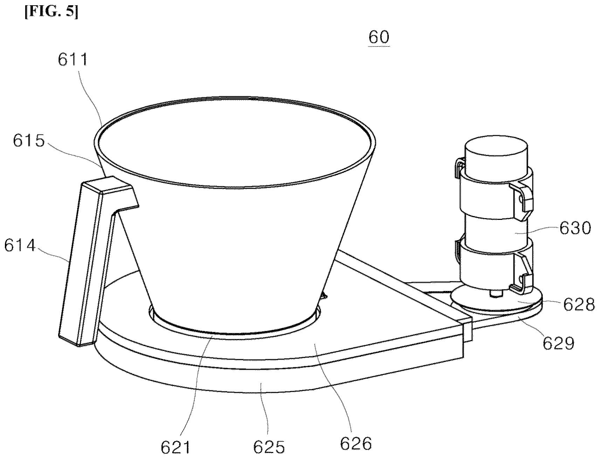

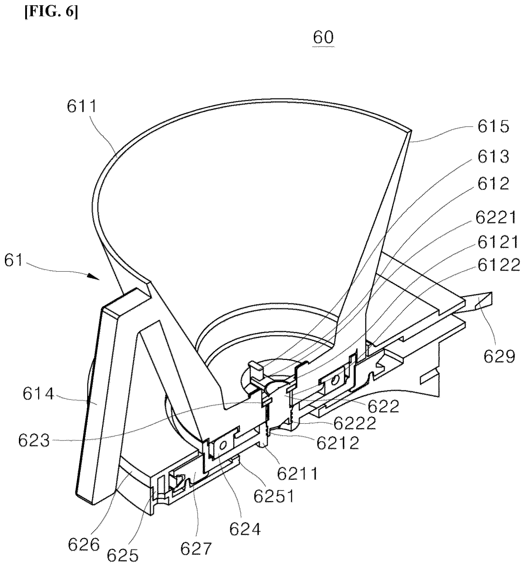

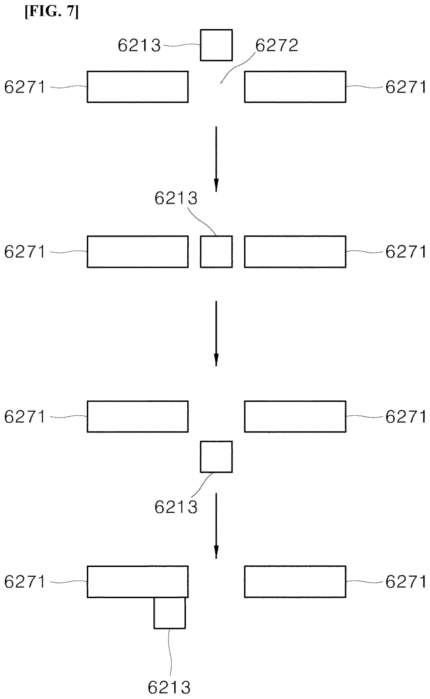

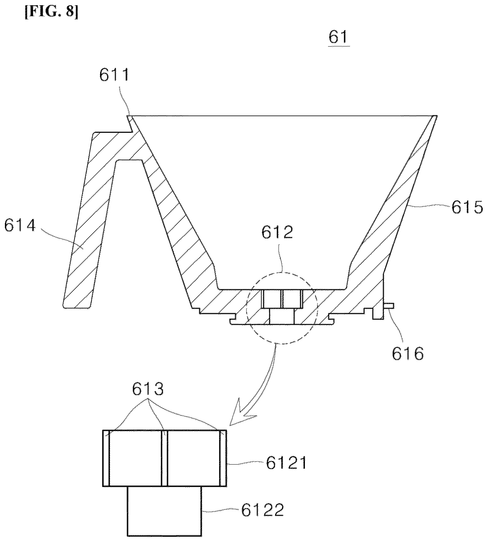

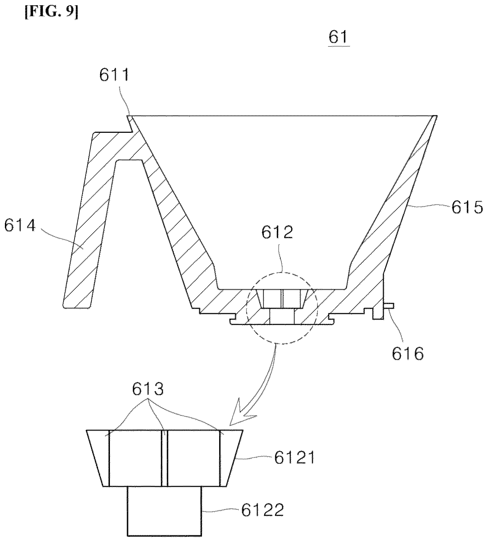

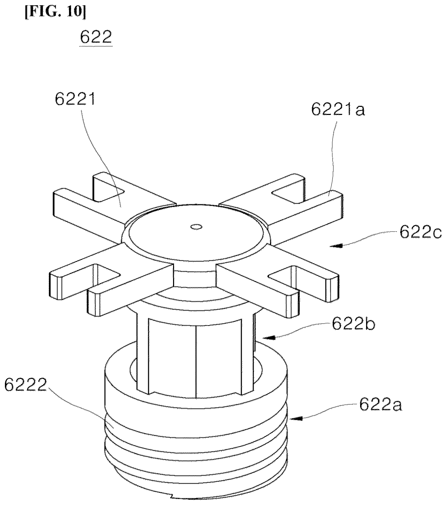

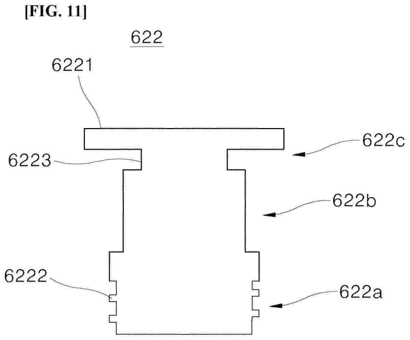

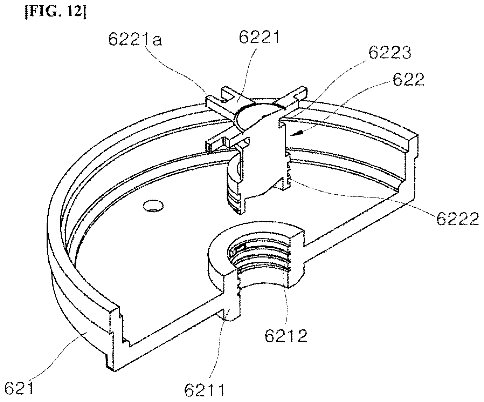

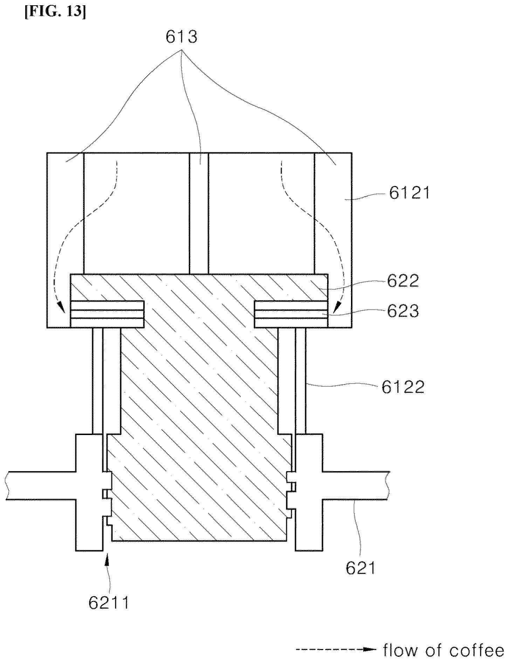

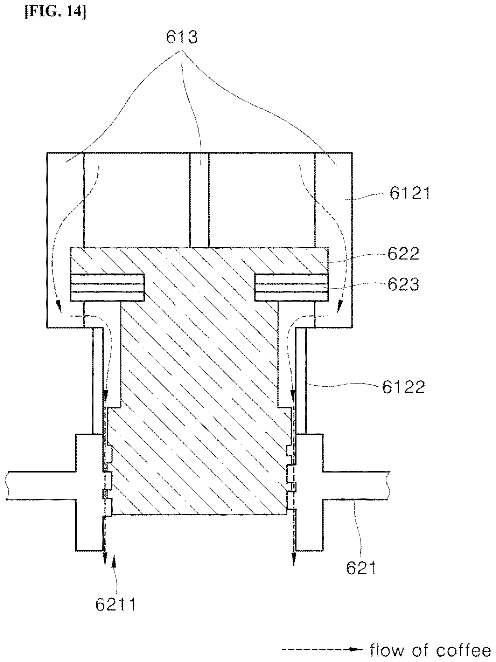

FIG. 3 is a diagram illustrating an exploded perspective view of the dripper module 60 according to an embodiment of the disclosure. FIG. 4 is a diagram illustrating a perspective view in which a first part of the dripper module 60 is detached from a second part of the dripper module 60, according to an embodiment of the disclosure. FIG. 5 is a diagram illustrating a perspective view in which a first part of the dripper module 60 is mounted on a second part of the dripper module 60, according to an embodiment of the disclosure. FIG. 6 is a diagram illustrating a cross-sectional perspective view of FIG. 5. FIG. 7 is a diagram for explaining a structure in which a first part of the dripper module 60 is mounted on a second part of the dripper module 60, according to an embodiment of the disclosure. FIG. 8 is a diagram illustrating a cross-sectional view of the dripper 61 according to an embodiment of the disclosure. FIG. 9 is a diagram illustrating a cross-sectional view of the dripper 61 according to another embodiment of the disclosure. FIG. 10 is a diagram illustrating a perspective view of the dripper cap 622 according to an embodiment of the disclosure. FIG. 11 is a diagram illustrating a cross-sectional view of the dripper cap 622 according to an embodiment of the disclosure. FIG. 12 is a diagram illustrating an exploded cross-sectional perspective view of some components of the dripper module 60 according to an embodiment of the disclosure. FIGS. 13 and 14 are diagrams for explaining the operations of opening and closing the extraction hole 612 according to an embodiment of the disclosure.

First, referring to FIGS. 3 to 5, the dripper module 60 may be configured to include a dripper 61 and a dripper valve module 62.

The dripper 61 may receive coffee powder provided from the grinder module 40 and water provided from the water outlet nozzle 50, respectively. The dripper 61 may include a dripper body 615, an extraction hole 612, a handle 614, and a fixing protrusion 616.

Although not shown in FIGS. 3 to 5, a filter (not shown) may be installed on the inner surface of the dripper 61. The filter primarily receives the coffee powder provided from the grinder module 40 and the water provided from the water outlet module 50, and may only pass through the liquid coffee dissolved in water. The inner surface of the dripper 61 may stably support the filter.

The dripper valve module 62 may perform an operation to open or close the extraction hole 612. In addition, the dripper valve module 62 may stably support the dripper 61 in the case 10.

The dripper valve module 62 may be configured to include a first dripper valve module 62a and a second dripper valve module 62b.

The first dripper valve module 62a may be coupled to the dripper 61 below the dripper 61. That is, the first dripper valve module 62a may be coupled to the lower surface (bottom surface) of the dripper 61. The first dripper valve module 62a may include a dripper base 621, a dripper cap 622, a dripper sealer 623, and a dripper wing 624.

As will be described later, the configuration of a portion of the first dripper valve module 62a, that is, the dripper base 621 and the dripper wing 624, may axially rotate about the central axis of the dripper body 615, more precisely, the central axis of the extraction hole 612. Accordingly, the first dripper valve module 62a may be coupled to the lower surface of the dripper 61 so as to be rotatable about its axis.

The second dripper valve module 62b may be connected to the case 10. The second dripper valve module 62b may include dripper supports 625 and 626, a first pulley 627, a second pulley 628, a belt 629, and a third motor 630. A portion of the belt 629, the second pulley 628, and the third motor 630 may be disposed inside the case 10. Other parts of the belt 629, the dripper supports 625 and 626, and the first pulley 627 may be connected to the outer surface of the case 10.

Referring to FIGS. 4 and 5, the first part of the dripper module 60 corresponding to the dripper 61 coupled to the first dripper valve module 62a may be mounted on or detached from the second part of the dripper module 60 corresponding to the second dripper valve module 62b. By detaching the first part of the dripper module 60, the user may easily install the filter and easily clean the dripper 61.

First, the structure of the dripper 61 will be described in more detail as follows.

Referring to FIGS. 6 to 9, the dripper 61 may include a dripper body 615. An internal space may be formed in the dripper body 615 to receive coffee powder and water. An inlet 611 of the dripper 61 may be formed at the top of the dripper body 615. The coffee powder provided from the grinder module 40 and water provided from the water outlet nozzle 50 may be received into the internal space of the dripper 61 through the inlet 611 of the dripper 61.

An extraction hole 612 may be formed on the lower surface of the dripper body 615. For example, the extraction hole 612 may be formed through the lower surface of the dripper body 615. The extraction hole 612 may be formed to extract the coffee produced by coffee powder and water into the coffee server 70.

In order to smoothly receive the coffee powder and water, the upper side of the dripper body 615 may be formed to be relatively large. In addition, in order to smoothly extract coffee by gravity, the lower side of the dripper body 615 may be formed to be relatively small. That is, the dripper body 615 may have an overall shape corresponding to a funnel.

The extraction hole 612 may be configured to include a first extraction hole 6121 and a second extraction hole 6122. The first extraction hole 6121 may be formed above the extraction hole 612, and the second extraction hole 6122 may be formed below the extraction hole 612. In particular, referring to FIG. 6, a portion of the dripper cap 622 may be disposed inside the extraction hole 612, and the other portion of the dripper cap 622 may be disposed inside the connection hole 6211 formed in the dripper base 621.

The first extraction hole 6121 and second extraction hole 6122 may be formed to be stepped from each other. That is, the size of the first extraction hole 6121 may be formed to be larger than the size of the second extraction hole 6122.

Referring to FIGS. 6 and 8, the first extraction hole 6121 according to an embodiment of the disclosure may have an overall cylindrical shape. That is, the size of the top of the first extraction hole 6121 and the size of the bottom of the first extraction hole 6121 may be the same.

Referring to FIG. 9, the first extraction hole 6121 according to another embodiment of the disclosure may have a funnel shape. That is, the size of the bottom of the first extraction hole 6121 may be smaller than the size of the top of the first extraction hole 6121.

Referring to FIGS. 6 to 9, at least one guide protrusion 613 may be formed on the inner surface of the first extraction hole 6121. Each of the at least one guide protrusions 613 may be formed to extend from the edge of the first extraction hole 6121 to the center of the extraction hole 6121. FIGS. 6 to 9 illustrate the first extraction hole 6121 in which four guide protrusions 613 are formed, but the number of guide protrusions 613 is not limited to FIGS. 6 to 9.

The guide protrusion 613 may be formed on the inner surface of the first extraction hole 6121 to guide the linear up and down movement of the dripper cap 622. That is, the guide protrusion 613 may be coupled with the guide member 6221 formed on the top of the dripper cap 622, more precisely, the guide hole 6221a. Accordingly, the guide protrusion 613 and guide member 6221 may guide the linear up and down movement of the dripper cap 622 and support the linear up and down movement.

A handle 614 that is held by the user's hand may be formed on a specific portion of the outer surface of the dripper body 615. The dripper body 615 may be easily held by the user by the handle 614.

Referring to FIGS. 8 and 9, the fixing protrusion 616 may be formed on the outer surface of the dripper 61. For example, the fixing protrusion 616 may be formed on the lower side of the outer surface of the dripper 61 to face the handle 614 of the dripper 61. In addition, the fixing protrusion 616 may have a rectangular shape, but the disclosure is not limited thereto. As will be described later, the fixing protrusion 616 may be inserted into the fixing hole 6262 formed in the second dripper support 626 to fix the dripper 61.

Referring to FIGS. 6 to 9, the second extraction hole 6122 may have an overall cylindrical shape. Meanwhile, according to another embodiment, the second extraction hole 6122 may have a shape corresponding to a funnel shape.

Next, the structure of the dripper valve module 62 will be described in more detail as follows.

The dripper valve module 62 may perform an operation to open or close the extraction hole 612. To open or close the extraction hole 612, the dripper valve module 62 may operate in the open and closed states. When the dripper valve module 62 is in the open state, the extraction hole 612 may be opened. When the dripper valve module 62 is in the closed state, the extraction hole 612 may be closed. In addition, when the extraction hole 612 is opened, the dripper valve module 62 may adjust the opening degree of the extraction hole 612. That is, the dripper valve module 62 may adjust the level of the open state. As will be described later, the level of the open state of the dripper valve module 62 may be adjusted by adjusting the height of the dripper cap 622, and accordingly, the opening degree of the extraction hole 612 may be adjusted.

Referring to FIGS. 3, 6, and 12, the first dripper valve module 62a may include a dripper base 621, a dripper cap 622, a dripper sealer 623, and a dripper wing 624.

The dripper base 621 may be coupled to the lower surface of the dripper 61. As will be described later, the dripper base 621 may rotate about the central axis of the dripper 61 by the second dripper valve module 62b. Accordingly, the dripper base 621 may be coupled to the lower surface of the dripper 61 so that it may be axially rotated. That is, the dripper base 621 may be rotatably coupled to the lower surface of the dripper 61 in the axial direction of the extraction hole 612.

Meanwhile, when the first part of the dripper module 60 is mounted on the second part of the dripper module 60, the dripper 61 may be fixed to the second part of the dripper module 60, and the dripper base 621 may only rotate the axis.

The dripper base 621 may have a shape corresponding to the lower surface of the dripper 61. That is, the dripper base 621 may have a cylindrical shape with an empty interior corresponding to the lower surface of the circular dripper 61. The dripper wing 624 may be disposed in the empty interior of the dripper base 621.

A connection hole 6211 may be formed in the dripper base 621. The connection hole 6211 may be formed through the dripper base 621 to communicate with the extraction hole 612. The coffee extracted from the dripper 61 may be provided to the coffee server 70 through the extraction hole 612 and connection hole 6211 that are in communication with each other.

In particular, referring to FIG. 12, the connection hole 6211 may be formed to protrude forward and backward from the lower surface (i.e., bottom surface) of the dripper base 621. In addition, a first screw 6212 may be formed on the inner surface of the connection hole 6211. As will be described later, the first screw 6212 may engage with the second screw 6222 (see FIG. 10) formed on the lower side of the outer surface of the dripper cap 622. For example, the first screw 6212 may be a female thread, and the second screw 6222 may be a male thread.

A plurality of first coupling members 6213 may be formed on the outer surface of the dripper base 621 to be spaced apart from each other. As an example, each of the four first coupling members 6213 may be formed to be spaced apart from each other on the lower side of the outer surface of the dripper base 621. The first coupling member 6213 may have a rectangular parallelepiped shape, but the disclosure is not limited thereto.

As will be described later, the first coupling member 6213 may be formed on the dripper base 621 to couple the dripper base 621 to the first pulley 627 of the second dripper valve module 62b. That is, the first coupling member 6213 may be alternately coupled with a plurality of second coupling members 6271 formed on the inner surface of the first pulley 627.

Referring to FIGS. 3, 6, 10, and 11, the dripper cap 622 is a component for directly opening and closing the extraction hole 612. In particular, referring to FIG. 6, the dripper cap 622 may be disposed inside the extraction hole 612 and connection hole 6211. The dripper cap 622 may have an overall cylindrical shape to correspond to the shapes of the extraction hole 612 and connection hole 6211.

The dripper cap 622 may be composed of an upper part, a middle part, and a lower part.

At least one guide member 6221 and sealer installation hole 6223 may be formed on the upper part of the dripper cap 622.

The number of at least one guide member 6221 may be equal to the number of at least one guide protrusion 613 and may be formed at the upper end of the dripper cap 622. For example, each of the at least one guide member 6221 may be formed on the front, rear, left, and right sides of the upper end of the dripper cap 622. That is, at least one guide member 6221 may be formed in a cross shape at the upper end of the dripper cap 622. However, the arrangement position of the guide member 6221 is not limited to the above drawing.

A guide hole 6221a may be formed at the outer end of the guide member 6221. In this case, the guide protrusion 613 formed in the first extraction hole 6121 may be inserted into the guide hole 6221a.

The sealer installation hole 6223 may be formed below the at least one guide member 6221. The sealer installation hole 6223 may provide a space for installing the dripper sealer 623.

The second screw 6222 may be formed on the lower side of the dripper cap 622. The second screw 6222 may engage with the first screw 6212 formed in the connection hole 6211. As will be described later, the dripper cap 622 may move up and down linearly due to the engagement of the first screw 6212 and second screw 6222.

The middle part of the dripper cap 622 may connect the upper part of the dripper cap 622 and the lower part of the dripper cap 622. The middle part of the dripper cap 622 may be formed to be stepped from the lower part of the dripper cap 622. That is, the size of the lower part of the dripper cap 622 may be larger than the size of the middle part of the dripper cap 622.

The dripper sealer 623 may be provided to prevent coffee from flowing out of the extraction hole 612 (i.e., second extraction hole 6122) when the extraction hole 612 is closed. As described above, the dripper sealer 623 may be disposed in the sealer installation hole 6223 provided on the lower side of the guide member 6221.

The dripper wing 624 may be fixedly coupled to the dripper base 621 to support the axial rotation of the dripper base 621. For example, the dripper wing 624 may be screwed to the dripper base 621. The dripper wing 624 may include a first dripper wing 624a and second dripper wing 624b that are opposed to each other. As described later, when the first part of the dripper module 60 is mounted on the second part of the dripper module 60, the dripper 61 may be fixed and the dripper base 621 may rotate about its axis, and the dripper wing 624 may rotate axially, along with the dripper base 621. In other words, it can perform a similar function to the bearing that is the dripper wing 624.

Referring to FIGS. 3 and 4, the second dripper valve module 62b may include the dripper supports 625 and 626, a first pulley 627, a second pulley 628, a belt 629, and a third motor 630.

The dripper supports 625 and 626 may support the dripper 61 coupled to the first dripper valve module 62a, that is, the first part of the dripper module 60, and provide a space where the first pulley 627 is installed. The dripper supports 625 and 626 may be configured to include a first dripper support 625 and a second dripper support 626. The first dripper support 625 may form the lower side of the dripper supports 625 and 626, and the second dripper support 626 may form the upper side of the dripper supports 625 and 626. The first dripper support 625 and second dripper support 626 may be coupled with each other to form dripper supports 625 and 626.

A first through hole 6251 communicating with the connection hole 6211 of the dripper base 621 may be formed in the first dripper support 625. A second through hole 6261 for inserting the dripper base 621 may be formed in the second dripper support 626. Therefore, the dripper base 621 coupled to the dripper 61 through the second through hole 6261 is inserted into the dripper supports 625 and 626, and the coffee extracted from the connection hole 6211 of the dripper base 621 may be provided to the coffee server 70 through the first through hole 6251.

A fixing hole 6262 may be formed in the second dripper support 626. The fixing hole 6262 may be formed to be connected to the second through hole 6261. For example, the fixing hole 6262 may have a rectangular shape.

The fixing protrusion 6262 formed on the dripper 61 may be inserted into the fixing hole 6262. That is, the dripper base 621 coupled to the lower surface of the dripper 61 may be accommodated in the second through hole 6261 while the fixing protrusion 616 is inserted into the fixing hole 6262. Accordingly, the dripper 61 does not rotate axially, and only the dripper base 621 may rotate axially.

The first pulley 627 may be disposed inside the dripper supports 625 and 626. The first pulley 627 may have a penetrating shape and may have an overall shape corresponding to the shape of the dripper base 621. For example, the first pulley 627 may have a ring shape with a penetrated interior.

A plurality of second coupling members 6271 may be formed on the inner surface of the first pulley 627. A portion of the belt 629 may be in contact with the outer surface of the first pulley 627.

Referring to FIG. 7, each of the plurality of second coupling members 6271 may be disposed to be spaced apart by a first distance. Accordingly, a gap (cap) 6272 may be formed between two adjacent coupling members 6271. In this case, the length of the gap 6272 corresponds to the first distance, and the first distance may be greater than the length of the first coupling member 6213 formed on the dripper base 621.

In this case, the first coupling member 6213 may be alternately coupled to the second coupling member 6271, and thus the first part of the dripper module 60 may be mounted on the second part of the dripper module 60.

Specifically, in a state where the first part of the dripper module 60 is not mounted, the first coupling member 6213 may be located above the gap 6272. Thereafter, when the user applies a downward external force to the first part of the dripper module 60, the first coupling member 6213 may pass through the gap 6272 and be positioned above the gap 6272. Thereafter, when the user axially rotates the first part of the dripper module 60, the upper surface of the first coupling member 6213 may contact the lower surface of the second coupling member 6271. Therefore, the first coupling member 6213 and second coupling member 6271 may be alternately coupled by contact between the first coupling member 6213 and the second coupling member 6271, and thus the dripper base 621 may be fixedly coupled to the first pulley 627. Ultimately, the first part of the dripper module 60 may be mounted on the second part of the dripper module 60.

The second pulley 628 may be disposed outside the dripper supports 625 and 626. The second pulley 628 may be disposed on the same plane as the first pulley 627. A hole may be formed in the center of the second pulley 628 for coupling to the drive shaft of the third motor 630. The outer surface of the second pulley 628 may be in contact with another portion of the belt 629. The second pulley 628 may perform the function of transmitting the driving force of the third motor 630 to the first pulley 627.

The belt 629 may be connected between the first pulley 627 and the second pulley 628. The belt 629 may transmit movement resulting from rotation of the second pulley 628 to the first pulley 627. The third motor 630 may provide power to rotate the dripper base 621.

Hereinafter, the operation of the dripper valve module 62 to open and close the extraction hole 612 of the dripper 61 will be described with reference to FIGS. 13 and 14. In this case, it is assumed that the first part of the dripper module 60 is mounted on the second part of the dripper module 60. In addition, in this embodiment, the extraction hole 612 is described assuming the shape shown in FIG. 8, but this embodiment may also be applied to the shape of the extraction hole 612 shown in FIG. 9.

First, the dripper cap 622 may be disposed at a default position shown in FIG. 13. Here, the default position may correspond to the position of the dripper cap 622 where the first screw of the connection hole 6211 and the second screw of the dripper cap 622 are completely engaged. That is, the default position may be a position where the top of the lower part of the dripper cap 622 and the top of the connection hole 6211 have the same height.

When the dripper cap 622 is disposed at the default position, the upper part of the dripper cap 622 may contact the bottom surface of the first extraction hole 6121. Specifically, the lower surface of the dripper shield 623 may contact the bottom surface of the first extraction hole 6121. Accordingly, the extraction hole 612, more precisely the second extraction hole 6122, may be closed. Even if the coffee powder dissolves with water and coffee is extracted, the extracted coffee may not fall into the second extraction hole 6122 and connection hole 6211.

The drive shaft of the third motor 630 may rotate in one direction (i.e., clockwise or counterclockwise). The second pulley 628 may axially rotate in one direction by rotation of the drive shaft of the third motor 630 in one direction, and the first pulley 627 may rotate in one direction by the belt 629. As the first pulley 627 rotates in one direction, the dripper base 621 fixedly coupled to the first pulley 627 may also rotate in one direction.

In this case, the dripper 61 may be fixed to the second dripper support 626 by the fixing protrusion 616 and fixing hole 6262. That is, the dripper 61 may not rotate axially, and only the dripper base 621 may rotate axially in one direction. As the dripper base 621 axially rotates in one direction, the connection hole 6211 may axially rotate in one direction, and thus the first screw 6212 formed in the connection hole 6211 may rotate in one direction.

Meanwhile, the guide protrusion 613 of the first extraction hole 6121 may be coupled to the guide member 6221 of the dripper cap 622. In this case, since the dripper 61 does not rotate axially, the dripper cap 622 may also not rotate axially. Accordingly, due to rotation of the first screw 6212 in one direction, the second screw 6222 of the dripper cap 622 may be unscrewed from the first screw 6212.

Therefore, as shown in FIG. 14, the unscrewed second screw 6222 moves upward linearly, and accordingly, the dripper cap 622 itself may move upward linearly inside the extraction hole 612. As the dripper cap 622 moves upward linearly, an open space may be generated between the dripper sealer 623 and the lower surface and the bottom surface of the first extraction hole 6121. Accordingly, the extraction hole 612 may be opened, and the extracted coffee may fall into the second extraction hole 6122 and connection hole 6211. In other words, when the first screw 6212 is not completely engaged with the second screw 6222, the upper part of the dripper cap 622 does not contact the bottom surface of the first extraction hole 6121, and the second extraction hole 6122 may be opened.

Thereafter, the drive shaft of the third motor 630 may rotate in the other direction opposite to one direction. As the drive shaft of the third motor 630 rotates in the other direction, the second pulley 628 axially rotates in the other direction, and the first pulley 627 may rotate in the other direction by the belt 629. As the first pulley 627 rotates in the other direction, the dripper base 621 coupled to the first pulley 627 may also rotate in the other direction.

As the dripper base 621 axially rotates in the other direction, the connection hole 6211 may axially rotate in the other direction, and accordingly, the first screw 6212 formed in the connection hole 6211 may rotate in the other direction. Accordingly, the second screw 6222 of the dripper cap 622 may be screwed to the first screw 6212 due to rotation of the second screw 6222 in the other direction. The screwed second screw 6222 may move downward linearly, and thus the dripper cap 622 itself may move downward linearly inside the extraction hole 612. As the dripper cap 622 moves downward linearly, the upper part of the dripper cap 622 may come into close contact with the first extraction hole 6121. Accordingly, the extraction hole 612 may be disposed back to the default position to close the extraction hole 612.

Also, the distance that the dripper cap 622 moves upward linearly may be proportional to the opening degree of the extraction hole 612. In other words, as the amount of rotation of the dripper base 621 in one direction increases, the distance of the dripper cap 622 moving upward linearly may increase, and the opening degree of the extraction hole 612 may increase. Therefore, the opening degree of the extraction hole 612 may be adjusted by adjusting the axial rotation amount of the dripper base 621, that is, the rotation amount of the drive shaft of the third motor 630.

Meanwhile, by opening and closing the extraction hole 612 by moving the dripper cap 622 up and down linearly, the coffee maker 1 according to an embodiment of the disclosure may extract coffee similar to the hand drip method. The coffee extraction operation of the coffee maker 1 is explained as follows.

First, the dripper cap 622 may be disposed at the default position, the dripper valve module 62 may operate in a closed state, and the extraction hole 612 may be closed.

Next, in the first water supply section, the water outlet nozzle 50 may supply water to the coffee powder received in the dripper 61. In this case, the extraction hole 612 is closed, so coffee may not fall into the coffee server 70. This may correspond to the pre-wetting process.

In addition, the dripper cap 622 may move upward linearly from the default position, the dripper valve module 62 may operate in an open state, and the extraction hole 612 may be opened. Meanwhile, the opening degree of the extraction hole 612 may be set based on the coffee recipe.

Thereafter, in the second water supply section, the water outlet nozzle 50 may supply water to the coffee powder received in the dripper 61. In this case, the extraction hole 612 is open, so coffee may fall into the coffee server 70. This may correspond to the coffee extraction process. Also, since the opening degree of the extraction hole 612 is set based on the coffee recipe, coffee of various flavors may be extracted.

Finally, when the second water supply section ends, the dripper cap 622 may be disposed back to a default position, the dripper valve module 62 may operate in a closed state, and the extraction hole 612 may be closed. Therefore, bitter coffee may not fall into the coffee server 70. In addition, when the coffee server 70 is detached from the base 12, the additionally extracted coffee may be prevented from falling on the base 12.

In short, the coffee maker 1 according to an embodiment of the disclosure may be installed with the dripper cap 622 inside the extraction hole 612 of the dripper 61, and move the dripper cap 622 up and down linearly by rotating the screw. Therefore, the opening and closing operation of the extraction hole 612 may be simply implemented, and manufacturing costs may be reduced.

In addition, the coffee maker 1 according to an embodiment of the disclosure may control the distance of linear up and down movement of the dripper cap 622 by controlling the amount of screw rotation. Accordingly, the opening degree of the extraction hole 612 may be adjusted simply and accurately. Ultimately, the coffee extraction speed may be easily adjusted and various coffee recipes may be implemented.

In addition, the coffee maker 1 according to an embodiment of the disclosure may be configured to include the dripper valve module 62 that opens and closes the extraction hole 612, the first dripper valve module 62a that is coupled to the lower surface of the dripper 61, and the second dripper valve module 62b that is connected to the case 10. In this case, when extracting coffee, the first dripper valve module 62a, which is coupled to the lower surface of the dripper 61, may be mounted on the second dripper valve module 62b to rotate the first dripper valve module 62a. When the extraction of coffee is completed, the first dripper valve module 62a coupled to the lower surface of the dripper 61 may be detached from the second dripper valve module 62b. Therefore, the dripper 61 may be easily mounted and detached, and the dripper 61 may be easily cleaned when the dripper 61 is detached.

As described above, the disclosure has been described with specific details such as specific components and certain embodiments and drawings, but this is only provided to aid the overall understanding of the disclosure, the disclosure is not limited to the above embodiments, and various modifications and variations can be made from this description by those skilled in the art to which the disclosure pertains. Accordingly, the spirit of the disclosure should not be limited to the described embodiments, and the claims described below as well as all modifications that are equivalent or equivalent to the claims will fall within the scope of the disclosure.

## Claims

1. A coffee maker, comprising:
a dripper that receives coffee powder and includes an extraction hole formed on a lower surface for extracting coffee from the coffee powder;
a dripper valve module that includes a first dripper valve module that couples with the lower surface of the dripper and a second dripper valve module that supports the dripper coupled to the first dripper valve module, and opens and closes the extraction hole; and
a water outlet module that supplies water to the coffee powder,
wherein the first dripper valve module includes a dripper base that is coupled to the lower surface of the dripper so as to be axially rotatable, and a dripper cap that moves up and down linearly inside the extraction hole to open and close the extraction hole based on screw rotation realized by the axial rotation of the dripper base,
the second dripper valve module axially rotates the dripper base.

2. The coffee maker of claim 1, wherein the dripper base is provided with a connection hole that communicates with the extraction hole,
the dripper cap is disposed inside the extraction hole and the connection hole,
a first screw is formed on an inner surface of the connection hole, and a second screw that engages with the first screw is formed on an outer surface of the dripper cap,
the first screw rotates by axial rotation of the dripper base, and the second screw is unscrewed or screwed by rotation of the first screw, so that the dripper cap moves up and down linearly inside the extraction hole.

3. The coffee maker of claim 2, wherein when the dripper base axially rotates in a first direction, the connection hole rotates in the first direction, the second screw is unscrewed from the first screw, and the dripper cap moves upward linearly inside the extraction hole,
when the dripper base rotates in a second direction opposite to the first direction, the connection hole rotates in the second direction, the second screw is screwed to the first screw, and the dripper cap moves downward linearly inside the extraction hole.

4. The coffee maker of claim 2, wherein when the dripper cap is located at a default position, the extraction hole is closed, and when the dripper cap moves upward linearly from the default position, the extraction hole is open.

5. The coffee maker of claim 4, wherein a distance that the dripper cap moves upward linearly is proportional to an opening degree of the extraction hole.

6. The coffee maker of claim 4, wherein the default position is a position of the dripper cap where the first screw is completely engaged with the second screw.

7. The coffee maker of claim 2, wherein the dripper cap includes a lower part where the second screw is formed, an upper part where at least one guide member for guiding a linear up and down movement of the dripper cap is formed, and a middle part connecting the lower part of the dripper cap and the upper part of the dripper cap.

8. The coffee maker of claim 7, wherein the extraction hole includes a first extraction hole and a second extraction hole that are formed to be stepped,
a size of the first extraction hole is larger than a size of the second extraction hole,
the first extraction hole corresponds to an upper side of the extraction hole and has at least one guide protrusion that guides the linear up and down movement of the dripper cap, and
the second extraction hole corresponds to a lower side of the extraction hole.

9. The coffee maker of claim 8, wherein each of the at least one guide member includes a guide hole, and
the guide hole is coupled to the guide protrusion to enable the linear up and down movement.

10. The coffee maker of claim 8, wherein a shape of the second extraction hole is cylindrical or funnel-shaped.

11. The coffee maker of claim 8, wherein when the first screw is completely engaged with the second screw, the upper part of the dripper cap contacts a bottom surface of the first extraction hole, and the second extraction hole is closed,
when the first screw is not completely engaged with the second screw, the upper part of the dripper cap does not contact the bottom surface of the first extraction hole, and the second extraction hole is opened.

12. The coffee maker of claim 7, wherein the first dripper valve module further includes a dripper sealer that is disposed below the at least one guide member and prevents coffee from flowing into the extraction hole when the extraction hole is closed.

13. The coffee maker of claim 1, wherein the first dripper valve module further includes a dripper wing that is fixedly coupled to the dripper base inside the dripper base and contacts the lower surface of the dripper,
when the dripper base axially rotates, the dripper does not rotate axially, and the dripper wing axially rotates.

14. The coffee maker of claim 1, wherein when the dripper coupled with the first dripper valve module is mounted on or detached from the second dripper valve module, and
when the dripper coupled with the first dripper valve module is mounted on the second dripper valve module, the second dripper valve module fixes the dripper so as not to rotate axially and rotate only the dripper base.

15. The coffee maker of claim 14, wherein the second dripper valve module includes a dripper support that accommodates a portion of the dripper coupled to the first dripper valve module, a first pulley that is provided so as to be axially rotatable inside the dripper support and is coupled to the dripper base, and a motor that implements axial rotation of the first pulley,
the dripper base rotates based on the axial rotation of the first pulley.

16. The coffee maker of claim 15, wherein the second dripper valve module further includes a second pulley coupled to a rotation shaft of the motor, and a belt connected between the first pulley and the second pulley,
when the motor is driven, the second pulley axially rotates, and the axial rotation of the second pulley is transmitted to the first pulley by the belt, so that the first pulley axially rotate.

17. The coffee maker of claim 15, wherein the dripper base is provided with a connection hole in communication with the extraction hole,
the dripper support includes a first dripper support and a second dripper support that is coupled to the first dripper support above the first dripper support,
a first through hole communicating with the connection hole is formed in the first dripper support, a second through hole for accommodating the dripper base is formed in the second dripper support, and the first pulley is disposed between the first dripper support and the second dripper support.

18. The coffee maker of claim 17, wherein a fixing protrusion for fixing the dripper is formed on a lower side of an outer surface of the dripper,
a fixing hole connected to the second through hole is formed in the second dripper support,
when the dripper base is accommodated in the dripper support while the fixing protrusion is inserted into the fixing hole, the dripper base axially rotates and the dripper is fixed.

19. The coffee maker of claim 15, wherein a plurality of first coupling members are formed on a lower side of the dripper base, and
a plurality of second coupling members are formed on an inner surface of the first pulley,
the dripper base and the first pulley are coupled by alternative coupling of the plurality of first coupling members and the plurality of second coupling members.

20. A coffee maker, comprising:
a case;
a dripper that receives coffee powder and includes an extraction hole formed in a lower surface for extracting coffee from the coffee powder;
a dripper valve module that includes a first dripper valve module coupled with the lower surface of the dripper, and a second dripper valve module connected to the case; and
a water outlet module that supplies water to the coffee powder,
wherein the first dripper valve module includes a dripper cap that moves up and down linearly inside the extraction hole by screw rotation, and opens and closes the extraction hole by linear up and down movement of the dripper cap,
the dripper coupled to the first dripper valve module is mounted on or detached from the second dripper valve module, and
when the coupled dripper is mounted, the second dripper valve module supports the coupled dripper and implements the screw movement.
